# EUROPÄISCHE PATENTSCHRIFT

(11) **EP 0 672 844 B1**
(45) Veröffentlichungstag und Bekanntmachung des Hinweises auf die Patenterteilung: **18.06.1997**
(21) Anmeldenummer: 95810173.5
(22) Anmeldetag: 16.03.1995
(51) Int. Cl.: F16G 11/00, D07B 9/00

(54) **Seilendverbindung für ein Drahtseil sowie Verfahren zu seiner Herstellung**
Wire rope end-joint and method for producing it
Joint pour l'extrémité d'un câble métallique et procédé pour sa fabrication

(30) Priorität: 17.03.1994 CH 801/94
(43) Veröffentlichungstag der Anmeldung: 20.09.1995
(73) Patentinhaber: Jakob AG, CH-3555 Trubschachen (CH)
(72) Erfinder: Jakob, Martin, CH-3550 Langnau (CH)
(74) Vertreter: Hug Interlizenz AG

(56) Entgegenhaltungen:
- EP-A- 0 489 357
- WO-A-92/14077
- DE-A- 2 249 620

## Beschreibung

### TECHNISCHES GEBIET

Die vorliegende Erfindung bezieht sich auf das Gebiet der Verbindungstechnik von Drahtseilen. Sie betrifft ein Seilendverbindung für ein Drahtseil mit einem Endstück, welches mit dem Ende des Drahtseiles fest verbunden ist. Sie betrifft weiterhin ein Verfahren zur Herstellung einer solchen Seilendverbindung.

### STAND DER TECHNIK

Drahtseile werden nicht nur seit langem zum Heben von Lasten oder einem anderweitigen Übertragen von Zugkräften eingesetzt, sondern in jüngster Zeit auch zunehmend als Elemente in der Gebäudearchitektur, wo sie beispielsweise als Wachstumshilfe für Pflanzen an Außenwänden, als Geländerverstrebungen oder dgl. verwendet werden.

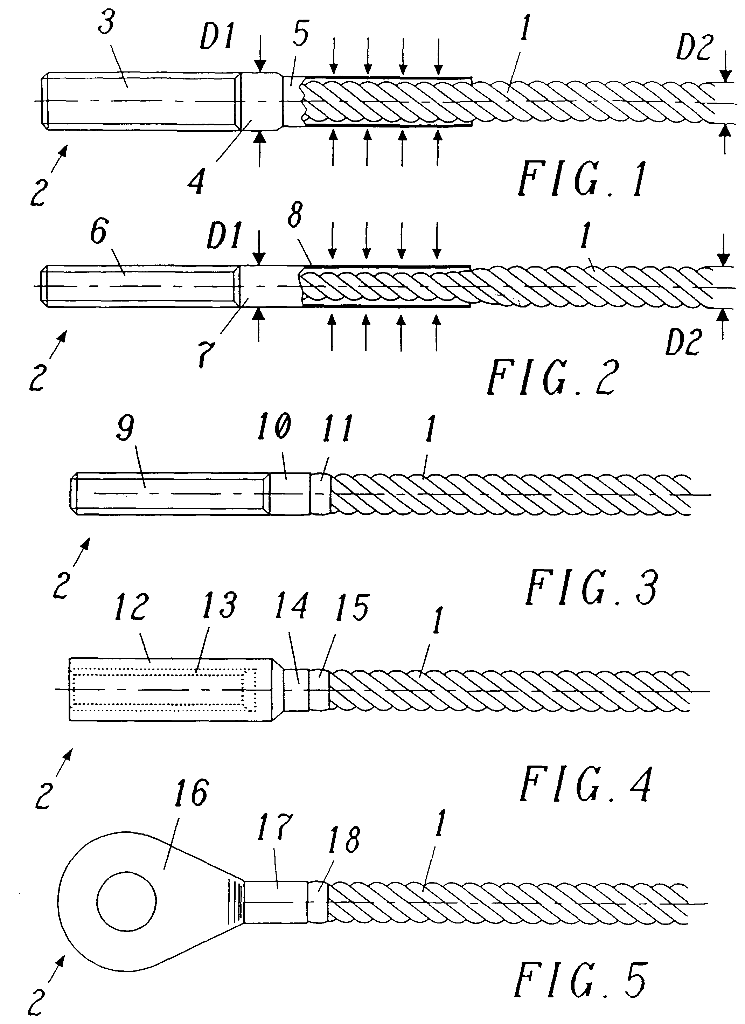

In jedem dieser Anwendungsfälle ist es notwendig, die Drahtseile an ihren Enden sicher und dauerhaft zu befestigen. Im Stand der Technik haben sich verschiedene Möglichkeiten der Befestigung bewährt. Eine Möglichkeit besteht darin, am Seilende mit oder ohne eine Kausche eine Schlaufe zu bilden, mittels derer das Seil an einem Haken oder Bolzen befestigt werden kann. Eine andere Möglichkeit besteht darin (Fig. 1), das Ende des Drahtseiles 1 mit einem speziellen Endstück 2 zu verbinden, welches eine Gabel, ein Außen- oder Innengewinde, eine Öse oder dgl. als Mittel zur Befestigung des Seiles aufweist.

Soll ein solches Endstück fest mit dem Ende des Drahtseiles 1 verbunden werden, geschieht dies üblicherweise durch eine am Endstück 2 angeformte Anpreßhülse 5. Das mit einer sauberen Endfläche versehene Ende des Drahtseiles 1 wird in die Anpreßhülse 5, deren Innendurchmesser etwas größer ist als der Außendurchmesser des Drahtseiles, eingeführt und die Hülse anschließend mittels eines Spezialwerkzeugs zusammengepreßt. Durch das Zusammenpressen entsteht eine hohe Reibung zwischen Drahtseil und Hülse, durch die eine ausreichende Zugfestigkeit der Verbindung erzielt werden kann.

Eine derartige und gattungsgemäße Verbindung ist aus der WO-A 92/14077 bekannt. Für derartige Anpreßhülsen-Verbindung gilt jedoch folgendes:
- Das Endstück mit der angeformten Hülse weist einen deutlich größeren Außendurchmesser D1 auf als das Drahtseil selbst (Außendurchmesser D2). Aus diesem Grunde muß, wenn ein fertig konfektioniertes Seil durch ein Durchgangsloch geführt werden soll, dieses mit einem deutlich größeren Lochdurchmesser ausgestattet sein, als nach Maßgabe des eigentlichen Seildurchmessers notwendig wäre, damit das relativ "dicke" Endstück durch das Durchgangsloch paßt.
- Durch das Anpressen der Hülse ergibt sich eine Kerbwirkung auf das darin befindliche Drahtseil, welche die Zugfestigkeit der Verbindung herabsetzt.
- Für eine vergleichsweise zugfeste Verbindung wird eine lange Anpreßhülse 5 benötigt, die zusätzlich Platz beansprucht und ein Biegen des Seiles direkt am Endstück verhindert.

Es ist auch bereits vorgeschlagen worden (Fig. 2), das Drahtseil 1 an seinem Ende auf einem durch die Hülsenlänge bestimmten Seilstück durch ein geeignetes Walzverfahren soweit im Durchmesser zu reduzieren, daß eine Anpreßhülse 8 verwendet werden kann, deren Aussendurchmesser D1 gleich dem Aussendurchmesser D2 des unbearbeiteten Drahtseiles ist. Jedoch wird durch die vorgängige Bearbeitung des Seiles die Zugfestigkeit weiter herabgesetzt. Darüber hinaus ist ein spezielles Walzverfahren nötig, was einen zusätzlichen Aufwand erfordert. Als Beispiel hierfür kann die EP-B 619 443 gelten die als EP-A am 12.10.1994 veröffentlicht wurde.

Weiterhin ist aus der EP-A 489 357 eine Verbindung bei einem Sägeseil bekannt, bei dem die Seilenden mit jeweils einer Gewindehülse über eine Lötung stoffschlüssig verbunden sind. Die beiden Gewindehülsen sind über eine weitere Gewindehülse miteinander verbunden. Auch ist aus der DE-A 2 249 620 eine Preß-Stumpf-Schweißverbindung von Seilen bekannt geworden, bei der die zu verschweißenden Seilenden über Elektroden aufgeheizt und dann gestaucht werden.

### DARSTELLUNG DER ERFINDUNG

Es ist Aufgabe der Erfindung, eine Seilendverbindung mit hoher Zugfestigkeit zu schaffen, die leicht herzustellen ist, für alle möglichen Arten von Endstücken eingesetzt werden kann, wenig Platz beansprucht, und die Verwendung von Endstücken erlaubt, deren Außendurchmesser kleiner oder gleich dem Außendurchmesser des Drahtseiles ist. Es ist weiterhin Aufgabe der Erfindung, ein Verfahren zur Herstellung einer solchen Seilendverbindung anzugeben.

Die Aufgabe wird bei einer Seilendverbindung der eingangs genannten Art durch die Merkmale des Anspruchs 1 gelöst. Durch die stumpfe stoffschlüssige Schweißverbindung wird eine vielseitige, kompakte, zugfeste Seilendverbindung erreicht, die das Drahtseil selbst nicht schwächt.

Eine erste bevorzugte Ausführungsform der Seilendverbindung nach der Erfindung ist dadurch gekennzeichnet, daß das Endstück und das Drahtseil aus einem nichtrostenden Edelstahl bestehen. Durch die Schweißverbindung wird eine maximale Zugfestigkeit der Seilendverbindung erreicht.

Eine zweite bevorzugte Ausführungsform der erfindungsgemäßen Seilendverbindung zeichnet sich dadurch aus, daß das Endstück eine im wesentlichen zylindrische Form aufweist, daß das Endstück stirnseitig mit dem Ende des Drahtseiles verbunden ist, und daß der Aussendurchmesser des Endstückes kleiner oder ungefähr gleich dem Aussendurchmesser des Drahtseiles ist. Hierdurch wird es möglich, das fertig konfektionierte Drahtseil durch Durchgangslöcher zu ziehen, die nicht wesentlich größer sind als es dem Aussendurchmesser des Drahtseiles entspricht.

Das erfindungsgemäße Verfahren ist dadurch gekennzeichnet, daß das Drahtseil mit einer senkrecht zur Seilachse orientierten ersten Endfläche versehen wird, daß das Endstück eine zweite Endfläche aufweist, welche ungefähr die gleiche Größe und Form hat wie die erste Endfläche, daß das Drahtseil und das Endstück so positioniert werden, daß die beiden Endflächen aufeinanderliegen, und daß das Drahtseil und das Endstück in dieser Position stoffschlüssig miteinander unter Schutzgas mittels Lichtbogen verschweißt werden.

Weitere Ausführungsformen ergeben sich aus den abhängigen Ansprüchen.

### KURZE ERLÄUTERUNG DER FIGUREN

Die Erfindung ist nachfolgend im Zusammenhang mit den Zeichnungen näher erläutert. Es zeigen
Fig. 1 eine erste Seilendverbindung mit Gewindebolzen und Anpreßhülse nach dem gattungsgemäßen Stand der Technik;
Fig. 2 eine zweite, im Durchmesser reduzierte und ebenfalls bekannte Seilendverbindung mit Gewindebolzen und Anpreßhülse;
Fig. 3 ein erstes Ausführungsbeispiel einer Seilendverbindung nach der Erfindung mit einem Gewindebolzen mit Aussengewinde;
Fig. 4 ein zweites Ausführungsbeispiel einer Seilendverbindung nach der Erfindung mit Gewindekopf mit Innengewinde;
Fig. 5 ein drittes Ausführungsbeispiel einer Seilendverbindung nach der Erfindung mit einer Öse; und
Fig. 6a-c verschiedene Schritte bei der Herstellung einer Seilendverbindung nach der Erfindung.

### WEGE ZUR AUSFÜHRUNG DER ERFINDUNG

In den Fig. 1 und 2 sind zwei Beispiele einer Seilendverbindung aus dem Stand der Technik dargestellt. In beiden Fällen ist an einem Ende eines Drahtseiles 1 ein Endstück 2 fest angebracht, welches einen Gewindebolzen 3 bzw. 6 mit einem Außengewinde, ein Zwischenstück 4 bzw. 7 und eine Anpreßhülse 5 bzw. 8 umfaßt. Das Drahtseil 1 ist mit seinem Seilende in das Innere der Anpreßhülse 5, 8 eingeführt. Die zugfeste Verbindung zwischen Endstück 2 und Drahtseil 1 wird dadurch hergestellt, daß die Anpreßhülse 5, 8 mit einem Spezialwerkzeug (z.B. einer hydraulischen Zange) zusammengepreßt wird (in Fig. 1 und 2 angedeutet durch die Gruppe von Pfeilen).

Im Fall der Fig. 1 ist der Durchmesser D2 des Drahtseiles 1 gleichbleibend. Das Endstück 2 mit der Anpreßhülse 5 hat daher einen größeren Durchmesser D1 als das Drahtseil (D1>D2). Wenn das fertig konfektionierte, d.h. mit dem Endstück 2 versehenen Drahtseil mit dem Endstück 2 durch ein Durchgangsloch geführt werden muß, muß dieses Durchgangsloch einen deutlich größeren Innendurchmesser aufweisen, als es dem Durchmesser D2 des Drahtseiles entspricht. Das Drahtseil 1 ist dann in dem Durchgangsloch mit großem Spiel gehalten.

Im Fall der Fig. 2 wird das Drahtseil 1 vor dem Anpressen des Endstückes 2 zunächst auf einer ausreichend großen Länge im Durchmesser D2 reduziert. Das Seilende mit dem reduzierten Durchmesser kann dann in ein Endstück 2 mit dünnerer Anpreßhülse 8 eingeschoben und verpreßt werden, so daß sich Durchmesser-Verhältnisse von D1:D2 gleich 1:1 erreichen lassen. In diesem Fall trägt das Endstück 2 nicht auf, so daß die Innendurchmesser aller Durchgangslöcher nach dem Durchmesser D2 des Drahtseiles 1 ausgerichtet werden können.

Beide bekannten Fälle einer Seilendverbindung zeichnen sich durch eine Preßverbindung aus, bei der das Drahtseil mehr oder weniger einer Kerbwirkung ausgesetzt ist, welche die Zugfestigkeit des Seiles selbst herabsetzen kann.

Ein erstes Ausführungsbeispiel einer erfindungsgemäßen Seilendverbindung, welches in den äußeren Abmessungen dem bekannten Beispiel aus Fig. 2 entspricht, ist in Fig. 3 dargestellt. Die Seilendverbindung besteht ebenfalls aus einem Drahtseil 1, dessen Ende mit einem Endstück 2 fest verbunden ist. Die Verbindung ist stoffschlüssig durch Schweißen unter Schutzgas mittels Lichtbogen ausgeführt. Seilende und Endstück 2 stoßen dabei stumpf aneinander. Das Endstück 2 weist eine im wesentlichen zylindrische Form auf und umfaßt einen Gewindebolzen 9 und ein zylindrisches Zwischenstück 10. Das Endstück 2 ist stirnseitig mit dem Ende des Drahtseiles 1 verbunden. Der Außendurchmesser D1 des Endstückes 2 ist kleiner oder ungefähr gleich dem Außendurchmesser D2 des Drahtseiles 1. Endstück 2 und Drahtseil 1 bestehen bevorzugt aus rostfreiem Edelstahl (z.B. Werkstoff Nr. 1.4310 bzw. 1.4401).

Die stoffschlüssige Schweißverbindung zwischen Drahtseil 1 und Endstück 2 erfolgt bevorzugt mittels des sogenannten Wig-Schweißverfahren. Es ist jedoch durchaus auch denkbar, andere für Edelstahl geeignete Schweißverfahren anzuwenden. Beim Schweißen entsteht zwischen dem Zwischenstück 10 und dem Drahtseil 1 eine Schmelzzone 11, die aufgeschmolzenes Material sowohl aus dem Zwischenstück 10 als auch aus dem Drahtseilende enthält. Diese Schmelzzone 11 muß quer zur Seilachse durchgehend ausgebildet sein, damit alle Litzen des Drahtseiles 1 an der stoffschlüssigen Verbindung teilnehmen. Grundsätzlich kann die Schmelzzone 11 nur aus den Materialien der beteiligten Werkstücke 2 und 1 zusammengesetzt sein. Es ist aber auch denkbar, während des Schweißvorganges Material von außen zuzusetzen, um eine bessere Auffüllung der Seilzwischenräume zu erreichen.

Durch die Schmelzzone 11 ergibt sich ein nahtloser Uebergang zwischen jedem einzelnen Draht des Drahtseiles 1 und dem massiven Zwischenstück 10 des Endstückes 2. Hierdurch wird bei kompakten Abmessungen eine Verbindung maximaler Zugfestigkeit (mehr als 60 % der Zugfestigkeit des Drahtseiles selbst) erzielt, ohne daß das Drahtseil 1 - wie in Fig. 2 - bearbeitet werden muß oder der Durchmesser des Endstückes 2 - wie in Fig. 1 - deutlich größer gewählt werden muß.

Anstelle des Gewindebolzens 9 aus Fig. 3 sind selbstverständlich eine Vielzahl von anderen Endstückformen im Rahmen der Erfindung vorstellbar. Zwei davon sind in Fig. 4 und 5 wiedergegeben: Beim Ausführungsbeispiel der Fig. 4 umfaßt das Endstück 2 einen Gewindekopf 12 mit einem Innengewinde 13, der über ein Zwischenstück 14 und eine Schmelzzone 15 mit dem Drahtseil 1 stoffschlüssig verbunden ist. Beim Ausführungsbeispiel der Fig. 5 ist das Endstück 2 als Öse 16 ausgebildet, die über ein Zwischenstück 17 und eine Schmelzzone 18 mit dem Drahtseil 1 verbunden ist. Gewindebolzen 9, Innengewinde 13 und Öse 16 bilden innerhalb des Endstückes 2 Anschlußmittel, mit denen das Drahtseil 1 mit einem (nicht gezeigten) Anschlußstück lösbar verbunden werden kann.

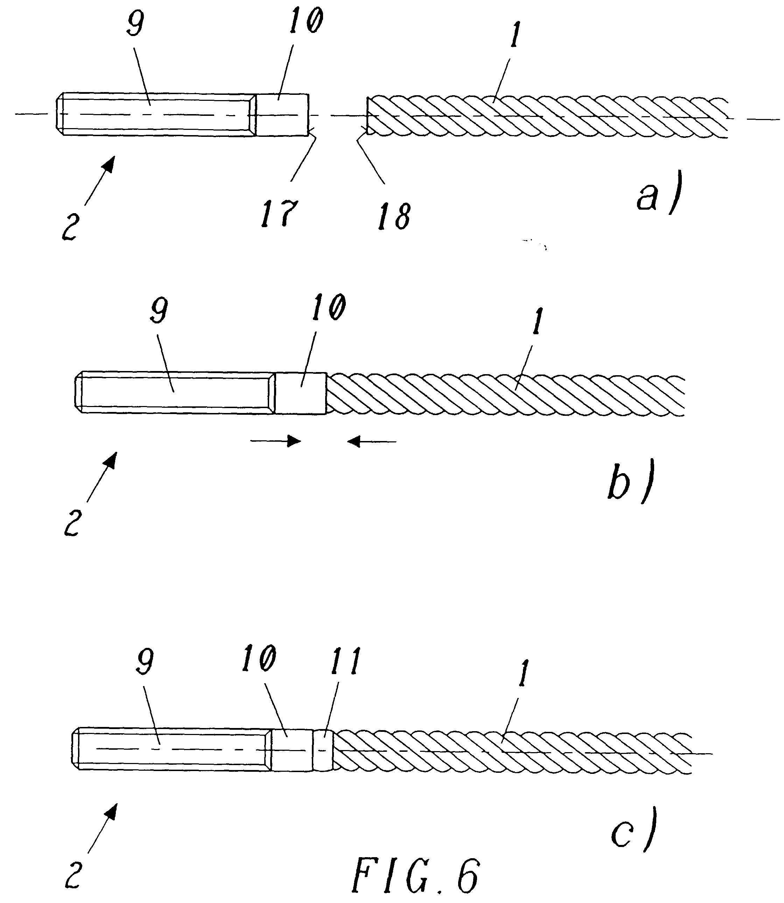

Ein bevorzugtes Ausführungsbeispiel für das erfindungsgemäße Verfahren zur Herstellung der Seilendverbindung nach Fig. 3 ist in Fig. 6 in verschiedenen Schritten dargestellt. In einem ersten Schritt (Fig. 6a) wird das Drahtseil 1 mit einer senkrecht zur Seilachse orientierten ersten Endfläche 18 versehen, indem es z.B. sauber abgesägt wird. Zugleich weist das Endstück 2 eine zweite Endfläche 17 auf, welche ungefähr die gleiche Größe und Form hat wie die erste Endfläche 18. In einer geeigneten Vorrichtung werden in einem zweiten Schritt dann das Endstück 2 und das Ende des Drahtseiles 1 eingespannt und so positioniert, daß die beiden Endflächen 17 bzw. 18 aneinanderliegen (Fig. 6b). In einem dritten Schritt werden das Drahtseil 1 und das Endstück 2 in dieser Position, vorzugsweise durch das WIG-Schweißverfahren, stoffschlüssig miteinander verschweißt (Fig. 6c).

Beim Schweißen wird zwischen dem Endstück 2 und dem Drahtseil 1 eine quer zur Seilachse durchgehende Schmelzzone 11 erzeugt, die vorzugsweise ausschließlich aus aufgeschmolzenem Material des Drahtseiles 1 und des Endstückes 2 besteht. Wenn mit einem gerichteten Lichtbogen geschweißt wird, ist es zweckmäßig, den Lichtbogen während des Schweißvorganges um die Seilachse herum zu drehen, um ein gleichmäßiges Aufschmelzen zu erreichen. Sollte sich beim Schweißen eine Schmelzzone 11 bilden, deren maximaler Durchmesser unerwünschterweise über den Durchmesser von Drahtseil 1 und Endstück 2 hinausragt, kann die Schmelzzone 11 im weichen Zustand entsprechend zurechtgeformt oder im verfestigten Zustand nachträglich bearbeitet, z.B. abgedreht werden.

Insgesamt ergibt sich mit der Erfindung eine Seilendverbindung, die zugfest, flexibel, kompakt und optisch ansprechend ist.

### BEZEICHNUNGSLISTE:

- 1: Drahtseil
- 2: Endstück
- 3,6,9: Gewindebolzen
- 4,7,10: Zwischenstück
- 5,8: Anpreßhülse
- 11,15,18: Schmelzzone
- 12: Gewindekopf
- 13: Innengewinde
- 14,17: Zwischenstück
- 16: Öse
- 17: Endfläche Endstück
- 18: Endfläche Drahtseil
- D1: Durchmesser Endstück
- D2: Durchmesser Drahtseil

## Patentansprüche

1. Seilendverbindung für ein Drahtseil (1), mit einem Endstück (2), welches mit einem Ende eines Drahtseiles (1) fest verbunden ist, **dadurch gekennzeichnet**,
daß das Endstück (2) und das Ende des Drahtseiles (1) stumpf miteinander verschweißt sind, wobei die Schweißung unter Schutzgas mittels Lichtbogen, insbesondere nach dem WIG-Schweißverfahren, erfolgt.

2. Seilendverbindung nach Anspruch 1,
**dadurch gekennzeichnet**,
daß das Endstück (2) und das Drahtseil (1) aus einem nichtrostenden Edelstahl bestehen.

3. Seilendverbindung nach einem der Ansprüche 1 bis 2,
**dadurch gekennzeichnet**, daß
- das Endstück (2) eine im wesentlichen zylindrische Form aufweist,
- das Endstück (2) stirnseitig mit dem Ende des Drahtseiles (1) verbunden ist, und
- der Außendurchmesser des Endstückes (2) kleiner oder ungefähr gleich dem Außendurchmesser des Drahtseiles (1) ist.

4. Seilendverbindung nach Anspruch 3,
**dadurch gekennzeichnet**,
daß das Endstück (2) auf der dem Seilende gegenüberliegenden Seite als Gewindebolzen (9) ausgebildet ist.

5. Seilendverbindung nach einem der Ansprüche 1 bis 2,
**dadurch gekennzeichnet**,
daß das Endstück (2) Anschlußmittel zum lösbaren Verbinden des Drahtseiles (1) mit einem Anschlußstück aufweist.

6. Seilendverbindung nach Anspruch 5,
**dadurch gekennzeichnet**,
daß die Anschlußmittel einen Gewindebolzen (9) umfassen.

7. Seilendverbindung nach Anspruch 5,
**dadurch gekennzeichnet**,
daß die Anschlußmittel einen Gewindekopf (12) mit einem Innengewinde (13) umfassen.

8. Verfahren zur Herstellung einer Seilendverbindung nach einem der Ansprüche 1 bis 8,
**dadurch gekennzeichnet**, daß
- das Drahtseil (1) mit einer senkrecht zur Seilachse orientierten ersten Endfläche (18) versehen wird,
- das Endstück (2) eine zweite Endfläche (17) aufweist, welche ungefähr die gleiche Größe und Form hat wie die erste Endfläche (18),
- das Drahtseil (1) und das Endstück (2) so positioniert werden, daß die beiden Endflächen (17 bzw. 18) aneinanderliegen, und
- das Drahtseil (1) und das Endstück (2) in dieser Position stoffschlüssig stumpf miteinander unter Schutzgas mittels Lichtbogen verschweißt werden.

9. Verfahren nach Anspruch 8,
**dadurch gekennzeichnet**,
daß beim Schweißen zwischen dem Endstück (2) und dem Drahtseil (1) eine quer zur Seilachse durchgehende Schmelzzone (11) erzeugt wird, die ausschließlich aus aufgeschmolzenem Material des Drahtseiles (1) und des Endstückes (2) besteht.

## Claims

1. A wire rope end-joint for a wire rope (1), with an end piece (2) which is fixedly connected with one end of a wire rope (1), characterized in that the end piece (2) and the end of the wire rope (1) are butt-welded, with the welding occurring under inert gas by means of arcing, in particular according to the TIG welding method.

2. A wire rope end-joint as claimed in claim 1, characterized in that the end piece (2) and the wire rope (1) consist of a stainless high-grade steel.

3. A wire rope end-joint as claimed in one of the claims 1 to 2, characterized in that
- the end piece (2) is provided with a substantially cylindrical shape,
- the end piece (2) is connected on the face side with the end of the wire rope (1) and
- the outer diameter of the end piece (2) is smaller or approximately equivalent to the outer diameter of the wire rope (1).

4. A wire rope end-joint as claimed in claim 3, characterized in that the end piece (2) is arranged as a threaded bolt (9) on the side opposite of the rope end.

5. A wire rope end-joint as claimed in one of the claims 1 to 2, characterized in that the end piece (2) is provided with connecting means for the detachable connection of the wire rope (1) with a joining element.

6. A wire rope end-joint as claimed in claim 5, characterized in that the connecting means comprise a threaded bolt (9).

7. A wire rope end-joint as claimed in claim 5, characterized in that the connecting means comprise a threaded piece (12) with an inner thread (13).

8. A method for producing a wire rope end-joint as claimed in one of the claims 1 to 8, characterized in that
- the wire rope (1) is provided with a first end surface (18) oriented perpendicularly to the rope axis,
- the end piece (2) is provided with a second end surface (17) which has approximately the same size and shape as the first end surface (18),
- the wire rope (1) and the end piece (2) are positioned in such a way that the two end portions (17 and 18) are mutually in contact and
- the wire rope (1) and the end piece (2) are materially butt-welded under inert gas by means of arcing.

9. A method as claimed in claim 8, characterized in that during the welding a continuous melting zone is produced between the end piece and the wire rope (1) which extends transversally to the rope axis and exclusively consists of completely molten material of the wire rope (1) and the end piece (2).

## Revendications

1. Joint pour l'extrémité d'un câble métallique (1) avec une pièce d'extrémité (2) assemblée de manière fixe à une extrémité d'un câble métallique (1) caractérisé en ce que la pièce d'extrémité (2) et l'extrémité du câble métallique (1) sont soudées bout à bout l'une avec l'autre, l'opération de soudage se déroulant en atmosphère gazeuse et au moyen d'un arc électrique, notamment selon le procédé de soudage à l'arc TIG.

2. Joint pour l'extrémité d'un câble métallique selon la revendication 1 caractérisé en ce que la pièce d'extrémité (2) et le câble métallique (1) sont en acier spécial inoxydable.

3. Joint pour l'extrémité d'un câble métallique selon l'une des revendications 1 à 2 caractérisé en ce que
- la pièce d'extrémité (2) a une forme essentiellement cylindrique,
- la pièce d'extrémité (2) est assemblée frontalement à l'extrémité du câble métallique (1), et en ce que
- le diamètre extérieur de la pièce d'extrémité (2) est inférieur ou sensiblement égal au diamètre extérieur du câble métallique (1).

4. Joint pour l'extrémité d'un câble métallique selon la revendication 3 caractérisé en ce que le côté de la pièce d'extrémité (2) faisant face à l'extrémité du câble est construit comme un boulon fileté (9).

5. Joint pour l'extrémité d'un câble métallique selon l'une des revendications 1 à 2 caractérisé en ce que la pièce d'extrémité (2) présente des moyens de jonction permettant de raccorder de façon détachable le câble métallique (1) à une pièce d'assemblage.

6. Joint pour l'extrémité d'un câble métallique selon la revendication 5 caractérisé en ce que les moyens de jonction comprennent un boulon fileté (9).

7. Joint pour l'extrémité d'un câble métallique selon la revendication 5 caractérisé en ce que les moyens de jonction surprennent une tête filetée (12) avec un filet femelle (13).

8. Joint pour l'extrémité d'un câble métallique selon l'une des revendications 1 à 7 caractérisé en ce que
- le câble métallique (1) est pourvu d'une première surface terminale (18) orientée verticalement par rapport à l'axe du câble,
- la pièce d'extrémité (2) présente une seconde surface terminale (17) dont la taille et la forme sont sensiblement celles de la première surface terminale (18),
- le câble métallique (1) et la pièce d'extrémité (2) sont positionnés de manière à ce que les deux surfaces terminales (17 et 18) reposent l'une contre l'autre, et en ce que
- le câble métallique (1) et la piece d'extrémité (2) sont soudées bout à bout l'une avec l'autre en engagement positif de matière, en atmosphère gazeuse et au moyen d'un arc électrique.

9. Joint pour l'extrémité d'un câble métallique selon la revendication 8 caractérisé en ce qu'une zone de fusion (11) s'étendant transversalement à l'axe du câble est produite lors du soudage entre la pièce d'extrémité (2) et le câble métallique (1), cette zone se composant exclusivement de matière fondue provenant du câble métallique (1) et de la pièce d'extrémité (1).
